# EUROPÄISCHE PATENTSCHRIFT

(11) **EP 1 018 174 B1**
(45) Veröffentlichungstag und Bekanntmachung des Hinweises auf die Patenterteilung: **10.04.2002**
(21) Anmeldenummer: 98932018.9
(22) Anmeldetag: 28.04.1998
(51) Int. Cl.: H01M 2/00

(54) **ALUMINIUM-ELEKTROLYTKONDENSATOR**
ALUMINIUM ELECTROLYTIC CAPACITOR
CONDENSATEUR ELECTROLYTIQUE A L'ALUMINIUM

(30) Priorität: 04.06.1997 DE 19723455
(43) Veröffentlichungstag der Anmeldung: 12.07.2000
(73) Patentinhaber: EPCOS AG, 81541 München (DE)
(72) Erfinder: SCHWEIKERT, Wilhelm, D-89522 Heidenheim (DE); HEBEL, Rainer, D-89518 Heidenheim (DE)
(74) Vertreter: Epping, Wilhelm, Dipl.-Ing.
(86) Internationale Anmeldenummer: DE9801174
(87) Internationale Veröffentlichungsnummer: WO9856051

(56) Entgegenhaltungen:
- GB-A- 2 154 062
- US-A- 4 296 186
- US-A- 4 367 053
- US-A- 4 471 846
- US-A- 4 557 621
- US-A- 4 561 796

## Beschreibung

Die Erfindung betrifft einen Aluminium-Elektrolytkondensator, insbesondere zur Anwendung in Kondensatorbatterien, der in ein metallisches Gehäuse eingebaut ist und bei dem das Gehäuse durch eine, mit einer Montageplatte verschraubte, Ringschelle gehaltert ist.

Derartige Ringschellen-Befestigungen sind beispielsweise aus dem Siemens Matsushita Components Datenbuch 1997, "Aluminium-Elektrolytkondensatoren", Seiten 142 bis 145, bekannt.

Bei diesen bekannten Ringschellen-Befestigungen wird das Gehäuse in der Ringschelle mittels Spannschrauben und Muttern fixiert, und die Ringschelle selbst wird dann durch Verschraubung mit einer Montageplatte verbunden. Eine derartige Befestigung eines Kondensators am Gehäusemantel ist allerdings problematisch, weil die Wandstärken allgemein sehr gering sind, und das Material aus relativ weichem Aluminium besteht.

Aufgabe der vorliegenden Erfindung ist es, einen Aluminium-Elektrolytkondensator der eingangs genannten Art anzugeben, der mechanisch stabil auf einer Montageplatte befestigt ist, ohne daß wesentliche Spannkräfte auf das Gehäuse einwirken.

Diese Aufgabe wird erfindungsgemäß dadurch gelöst, daß an der Ringschelle ein konisch ausgebildetes Teil angeordnet ist, das in eine an der Montageplatte angebrachte Bohrung eingreift.

Vorteilhafte Ausgestaltungen sind Gegenstand von Unteransprüchen.

Die Erfindung wird anhand der folgenden Ausführungsbeispiele näher erläutert.

In der dazugehörenden Zeichnung zeigen
- Figur 1: einen in einer Montageplatte befestigten Kondensator in Seitenansicht und
- Figur 2: eine Aufsicht auf den Kondensator in der in Figur 1 angegebenen Ebene.

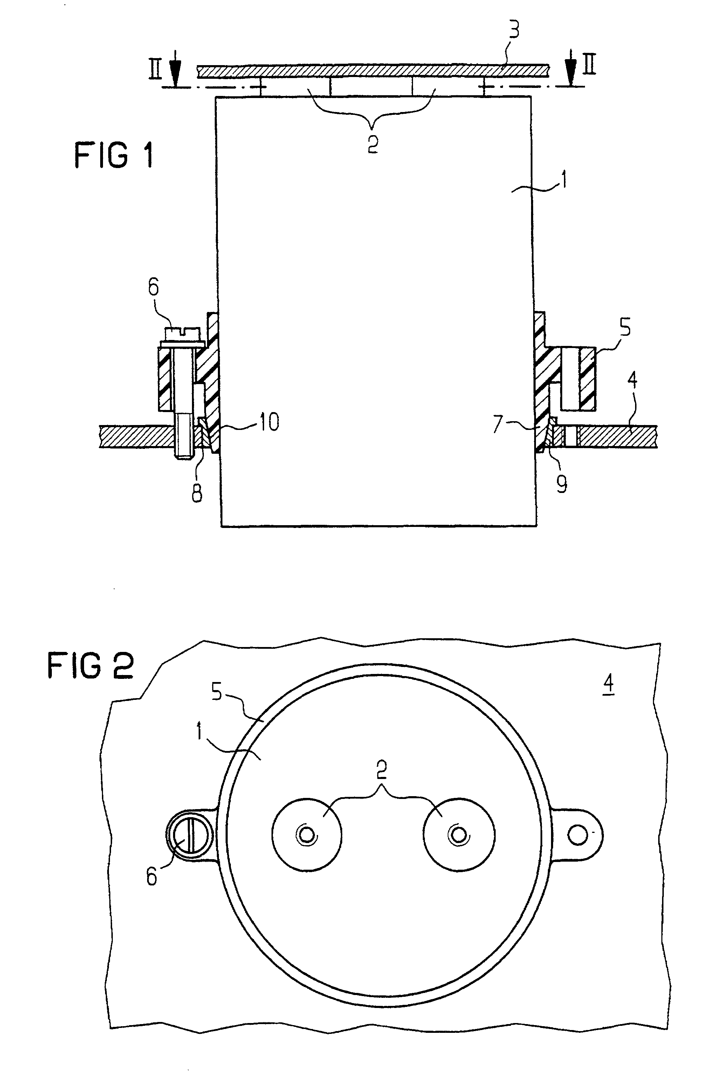

In der Figur 1 ist das Gehäuse 1 eines Aluminium-Elektrolytkondensators dargestellt, der mit seinen Anschlüssen 2 an einer Stromschiene 3 befestigt ist. In der Stromschiene 3 sind dabei in der Figur nicht dargestellte separate Leiterbahnen für die gegenpoligen Anschlüsse 2 angeordnet.

Das Kondensatorgehäuse 1 ist durch eine Ringschelle 5 fixiert, die mittels Schrauben 6 mit einer Montageplatte 4 verbunden ist. Die Ringschelle 5 besteht aus einem isolierenden Werkstoff, zum Beispiel Kunststoff, und besitzt ein konisch geformtes Teil, das in eine in der Montageplatte 4 angebrachte Montagebohrung 8 eingreift.

Beim Verschrauben der Ringschelle 5 mit der Montageplatte 4 wird das konische Teil 7 in die Montagebohrung 8 gezogen. Durch die dabei erfolgende Durchmesserverkleinerung des Konusteils 7 erfolgt eine mechanisch äußerst stabile Befestigung, bei der die Spannkräfte direkt in die Montageplatte 4 eingeleitet werden. Dabei können zur Unterstützung der Durchmesserverkleinerung Schlitze im Konusteil 7 angeordnet sein.

Durch die geschilderte Ausführung wird erreicht, daß die vor allem bei Kunststoffen kritischen Biegespannungen in der Ringschelle 5, die zum Beispiel bei Schwingbeanspruchung der Baugruppe auftreten, durch diese Montageart erheblich reduziert werden.

Bei metallischen Montageplatten 4 wird zur Vermeidung der Kerbgefahr und als Definition der Lochkante ein Schutzring 9 zwischen konischem Teil 7 und Montageplatte 4 angeordnet, der vorzugsweise aus Kunststoff besteht und auf seiner Innenseite 10 konisch ausgebildet ist.

Bei Montageplatten 4 aus Kunststoff oder abgerundeter Lochkante kann dieser Schutzring entfallen.

Durch das konisch ausgebildete Teil 7 können Durchmessertoleranzen des Kondensatorgehäuses 1 ausgeglichen werden, wobei der Bereich des Toleranzausgleiches durch den Winkel und die Länge des Konus bestimmt ist. Wie bereits geschildert, kann der konische Bereich 7 der Ringschelle 5 durch vorzugsweise zwei bis vier Schlitze unterbrochen sein, wobei aber selbstverständlich auch mehr Schlitze angeordnet werden können.

Ein weiterer Vorteil bei der Befestigung des Kondensatorgehäuses 1 mit einer Ringschelle 5 gemäß der Erfindung besteht darin, daß auch Längentoleranzen der Kondensatorgehäuse 1 ausgeglichen werden, was besonders bei Kondensatorbatterien wichtig ist.

Die Verspannkräfte werden dabei primär durch die Montageplatte 4 und nicht durch die Ringschelle 5 aufgenommen.

In der Figur 2 ist eine Draufsicht auf das Kondensatorgehäuse 1 ohne Stromschiene dargestellt. Die Ringschelle 5 wird dabei mittels zwei Schrauben 6 mit der Montageplatte 4 verbunden. Alternativ kann die Verschraubung allerdings auch an mehr Punkten, zum Beispiel drei oder vier, erfolgen.

## Patentansprüche

1. Aluminium-Elektrolytkondensator, insbesondere zur Anwendung in Kondensatorbatterien, der in eine metallisches Gehäuse (1) eingebaut ist und bei dem das Gehäuse (1) durch eine mit einer Montageplatte (4) verschraubte Ringschelle (5) gehaltert ist,
**dadurch gekennzeichnet,**
**daß** an der Ringschelle (5) ein konisch ausgebildetes Teil (7) angeordnet ist, das in eine in der Montageplatte (4) angebrachte Bohrung (8) eingreift.

2. Aluminium-Elektrolytkondensator nach Anspruch 1,
**dadurch gekennzeichnet,**
**daß** das konisch ausgebildete Teil (7) mit Schlitzen versehen ist.

3. Aluminium-Elektrolytkondensator nach Anspruch 1 oder 2,
**dadurch gekennzeichnet,**
**daß** die Ringschelle (5) aus einem isolierenden Werkstoff besteht.

4. Aluminium-Elektrolytkondensator nach einem der Ansprüche 1 bis 3,
**dadurch gekennzeichnet,**
**daß** in der Bohrung (8) zwischen konisch ausgebildetem Teil (7) und Montageplatte (4) ein Schutzring (9) angeordnet ist.

5. Aluminium-Elektrolytkondensator nach Anspruch 4,
**dadurch gekennzeichnet,**
**daß** der Schutzring (9) aus Kunststoff besteht.

6. Aluminium-Elektrolytkondensator nach Anspruch 4 oder 5,
**dadurch gekennzeichnet,**
**daß** der Schutzring (9) auf seiner Innenseite (10) konisch geformt ist.

## Claims

1. Aluminium electrolytic capacitor, in particular for use in capacitor banks, which is fitted in a metallic housing (1) and in which the housing (1) is held by means of a ring clamp (5) which is screwed to a mounting plate (4),
**characterized**
**in that** a conical part (7) is arranged on the ring clamp (5) and engages in a hole (8) incorporated in the mounting plate (4).

2. Aluminium electrolytic capacitor according to Claim 1,
**characterized**
**in that** the conical part (7) is provided with slots.

3. Aluminium electrolytic capacitor according to Claim 1 or 2,
**characterized**
**in that** the ring clamp (5) is composed of an insulating material.

4. Aluminium electrolytic capacitor according to one of Claims 1 to 3,
**characterized**
**in that** a protection ring (9) is arranged in the hole (8), between the conical part (7) and the mounting plate (4).

5. Aluminium electrolytic capacitor according to Claim 4,
**characterized**
**in that** the protection ring (9) is composed of plastic.

6. Aluminium electrolytic capacitor according to Claim 4 or 5,
**characterized**
**in that** the protection ring (9) is conical on its inside (10).

## Revendications

1. Condensateur électrique à l'aluminium, destiné notamment à être utilisé dans des batteries de condensateur, qui est inséré dans un godet (1) métallique et dans lequel le godet (1) est maintenu par un collier (5) de serrage vissé à une plaque (4) de montage,
**caractérisé**
**en ce qu'**il est monté sur le collier (5) de serrage une partie (7) conique qui pénètre dans un trou (8) ménagé dans la plaque (4) de montage.

2. Condensateur électrique à l'aluminium suivant la revendication 1, **caractérisé en ce que** la partie (7) conique est munie de fentes.

3. Condensateur électrique à l'aluminium suivant la revendication 1 ou 2, **caractérisé en ce que** le collier (5) de serrage est en un matériau isolant.

4. Condensateur électrique à l'aluminium suivant l'une des revendications 1 à 3, **caractérisé en ce qu'**il est interposé dans le trou (8) entre la partie (7) conique et la plaque (4) de montage une bague (9) de protection.

5. Condensateur électrique à l'aluminium suivant la revendication 4, **caractérisé en ce que** la bague (9) de protection est en matière plastique.

6. Condensateur électrique à l'aluminium suivant la revendication 4 ou 5, **caractérisé en ce que** la face (10) intérieure de la bague (9) de protection est conique.
